# EUROPÄISCHE PATENTANMELDUNG

(11) **EP 2 540 457 A2**
(43) Veröffentlichungstag der Anmeldung: **02.01.2013**
(21) Anmeldenummer: 12004847.5
(22) Anmeldetag: 28.06.2012
(51) Int. Cl.: B25J 15/00

(54) **Handhabungsvorrichtung zum Entfernen von wiederverwendbaren Kernen**

(30) Priorität: 29.06.2011 DE 102011107332
(71) Anmelder: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(57) **Zusammenfassung**

Die Erfindung betrifft eine Handhabungsvorrichtung zum manipulierenden Entfernen von mindestens zwei wiederverwendbaren Kernen in einem Arbeitsgang, wobei die Handhabungsvorrichtung mindestens zwei öffen- und schließbare Greifer aufweist. Dazu sind die Greifer um ihre jeweiligen Rotationsachsen antreibbar geführt. Ein greifertragendes Getriebe wird in der Handhabungsvorrichtung angetrieben linear geführt. Die Rotations- und die Linearbewegung finden zumindest zeitweise gleichzeitig statt und sind dabei zueinander koordiniert.

Mit der vorliegenden Erfindung wird eine Handhabungsvorrichtung entwickelt, mit der es möglich ist, wiederverwendbare, zumindest bereichsweise hintergreifende Kerne von den herzustellenden Werkstücken einfach und rationell zu trennen.

## Beschreibung

Die Erfindung betrifft eine Handhabungsvorrichtung zum manipulierenden Entfernen von mindestens zwei wiederverwendbaren Kernen in einem Arbeitsgang, wobei die Handhabungsvorrichtung mindestens zwei öffen- und schließbare Greifer aufweist.

In der Regel besteht eine Spritzgießmaschine aus einer Spritzeinheit und einer Schließeinheit. In der Spritzeinheit wird das Vorprodukt, z.B. ein Kunststoffgranulat, erwärmt und dadurch plastisch fließfähig. Ein Druckkolben der Spritzeinheit spritzt die flüssige Vorproduktmasse durch mindestens eine Düse in die z.B. gekühlte, meist mehrteilige Schließeinheit, in der sie erstarrt. Nach dem Erstarren wird die Schließeinheit entlang einer Arbeitsfuge geöffnet, und das fertig gespritzte Bauteil ausgeworfen oder entnommen.

Bei Bauteilen, deren Geometrie z.B. Gewindebohrungen umfasst, werden für diese Gewindebohrungen wiederverwendbare Kerne als Teil der Schließeinheit benötigt. Beim Entformen des gespritzten Bauteils werden entweder die Kerne aus dem Bauteil oder das Bauteil von den Kernen durch eine entsprechende Schraubbewegung entfernt. Meist werden für diesen Schraubvorgang spezielle angetriebene Vorrichtungen an der Schließeinheit angebaut.

Beim spritzgießtechnischen Herstellen von nachträglich zu brennenden Keramikteilen oder beim Metallpulverspritzgießen hat man das Problem, dass man bei solchen Einzweckentformungsvorrichtungen für jedes Gewinde aufgrund des vorzuhaltenden Schwundmaßes ein Sondergewinde benötigt.

Der vorliegenden Erfindung liegt die Problemstellung zugrunde, eine universelle Handhabungsvorrichtung zu entwickeln, mit der es möglich ist, wiederverwendbare, zumindest bereichsweise hintergreifende Kerne von den herzustellenden Werkstücken einfach und rationell zu trennen.

Diese Problemstellung wird mit den Merkmalen des Patentanspruchs 1 gelöst. Dazu sind die Greifer um ihre jeweiligen Rotationsachsen antreibbar geführt. Ein greifertragendes Getriebe wird in der Handhabungsvorrichtung angetrieben linear geführt. Die Rotations- und die Linearbewegung finden zumindest zeitweise gleichzeitig statt und sind dabei zueinander koordiniert.

Mit einer derartigen Vorrichtung ist es möglich, durch die steuer- und regelbaren Antriebe der entsprechenden Achsen des Handhabungsgeräts in Kombination mit einem als Mehrfachausschraubgerät konstruierten z.B. separat angetriebenen Getriebe einer Linearbewegung eine Rotationsbewegung zu überlagern. Dabei können beide Bewegungen in einem konstanten Verhältnis zueinander stehen, womit z.B. eine Schraube aus einem Gewinde bewegt werden kann. Es ist aber auch möglich, bei einer kontanten Rotationsbewegung die Geschwindigkeit der Linearbewegung zu ändern oder umgekehrt. Auch ist es denkbar, einer längeren Linearbewegung eine kurzzeitige Rotationsbewegung zu überlagern. Eine solche Bewegung wird benötigt, um z.B. einen Bajonettverschluss zu entformen.

Weitere Einzelheiten der Erfindung ergeben sich aus den Unteransprüchen und der nachfolgenden Beschreibung eines schematisch dargestellten Ausführungsbeispieles.
- Figur 1:: perspektivisch dargestellte Anordnung einer Spritzgießmaschine und eines Handhabungsgerätes mit einer Mehrfachausdreheinheit;
- Figur 2:: Mehrfachausdreheinheit mit Blick auf die Greifer;
- Figur 3:: Teillängsschnitt Mehrfachausdreheinheit, roboternaher Bereich;
- Figur 4:: Teillängsschnitt Mehrfachausdreheinheit, roboterferner Bereich;
- Figur 5:: perspektivisch dargestellte Gewindehülse;
- Figur 6:: Draufsicht auf die Gewindehülse;
- Figur 7:: Seitenansicht der Gewindehülse;
- Figur 8:: Unteransicht der Gewindehülse;
- Figur 9:: Längsschnitt der Gewindehülse;
- Figur 10:: perspektivisch dargestellter Kniehebel;
- Figur 11:: Draufsicht auf den Kniehebel;
- Figur 12:: Seitenansicht des Kniehebels;
- Figur 13:: Unteransicht des Kniehebels;
- Figur 14:: Längsschnitt des Kniehebels.

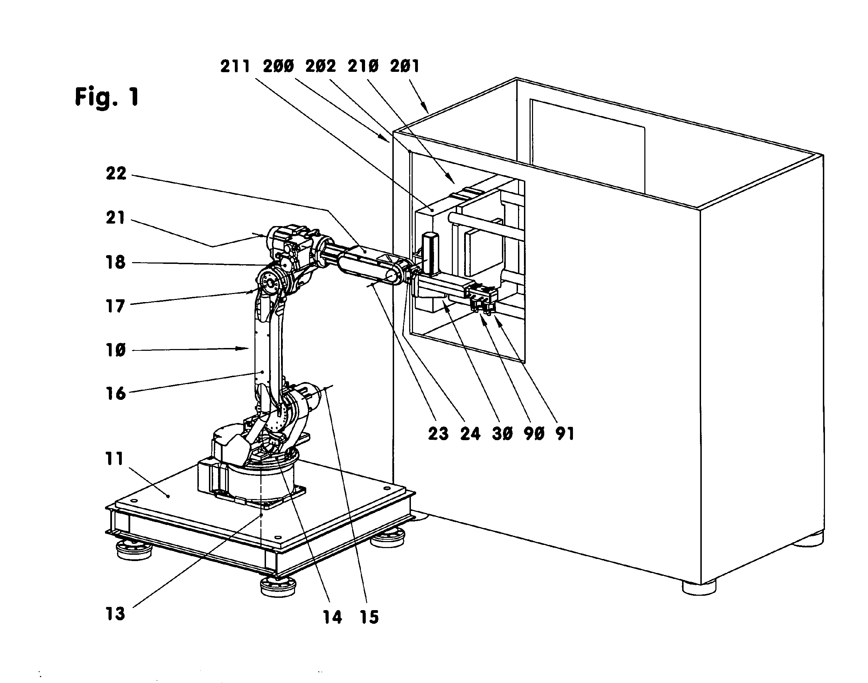

Die Figur 1 zeigt im Vordergrund ein vor einer Spritzgießmaschine (200) angeordnetes als Gelenkroboter ausgebildetes Handhabungsgerät (10) mit einer sogenannten RRR-Kinematik. Die serielle kinematische Struktur des Gelenkroboters (10) hat drei rotatorische Hauptachsen und zwei rotatorische Nebenachsen. Die Hauptachsen stellen die A-Achse (13), die B-Achse (15) und die C-Achse (17) dar. Die A-Achse (13) ist ein Drehtisch (14) mit vertikaler Rotationsachse, der auf der Grundplatte (11) der Handhabungsvorrichtung gelagert ist. Der Drehtisch (14) lagert einen um die horizontale B-Achse (15) - um z.B. 180 Winkelgrade - schwenkbaren Fußhebel (16). Am freien Ende des Fußhebels (16) sitzt als Gelenk mit ebenfalls horizontaler Schwenkachse die C-Achse (17), die den Kniehebel (18) trägt. Der Kniehebel (18) ist gegenüber dem Fußhebel (16) um z.B. 270 Winkelgrade schwenkbar.

Die erste Nebenachse, die D-Achse (21), ist eine Rotationsachse. Sie besteht aus einem um seine Längsachse drehbaren Tragarm (22), der im freien Ende des Kniehebels (18) gelagert ist. Die zweite Nebenachse ist die E-Achse (23), deren Kupplung (24) die Mehrfachausschraubeinheit (30) um z.B. 270 Winkelgrade schwenkbar lagert.

Durch eine entsprechend koordinierte Ansteuerung der einzelnen Achsen (13, 15, 17, 21, 23) kann nahezu jede beliebig im Arbeitsraum des Gelenkroboters (10) gelegene gerade Strecke oder gekrümmte Bahnkurve abgefahren werden. Das lässt sich auch mit Handhabungsgeräten realisieren, die auf einem kartesischen, einem zylindrischen oder einem Polarroboter basieren. Die Roboter verfügen dann entsprechend über eine TTT-, RTT- oder RRT-Kinematik. Hierbei steht das "T" für translatorische und das "R" für rotatorische Hauptachsen bzw. Führungen.

Anstelle dieser Roboter kann auch ein Handhabungsgerät benutzt werden, das statt der seriellen Struktur eine parallele oder hybride Struktur aufweist. Als parallele Strukturen können Tipode, Pentapode oder Hexapode verwendet werden.

In Figur 1 ist hinter dem Gelenkroboter (10) die Spritzgießmaschine (200) dargestellt. Letztere ist von einer Kabine (201) umgeben, die zum Gelenkroboter (10) hin ein Fenster (202) aufweist. Hinter dem Fenster (202) ist von dem Spritzgießwerkzeug (210) die Schließeinheit (211) zu erkennen.

Die an der E-Achse (23) gelagerte Mehrfachausschraubeinheit (30) besteht nach Figur 1 aus einem nahezu quaderförmigen Getriebegehäuse (40), an dessen freien Ende zwei nach unten hängende Dreibacken-Greifer (90, 91) angeordnet sind. Am hinteren, der E-Achse (23) zugewandten Ende befindet sich eine Flanschplatte (32) mit einem Kupplungsgegenstück (31), über das die Mehrfachausschraubeinheit (30) an der schwenkbaren Kupplung (24) des E-Achsen-Gelenks angeordnet ist.

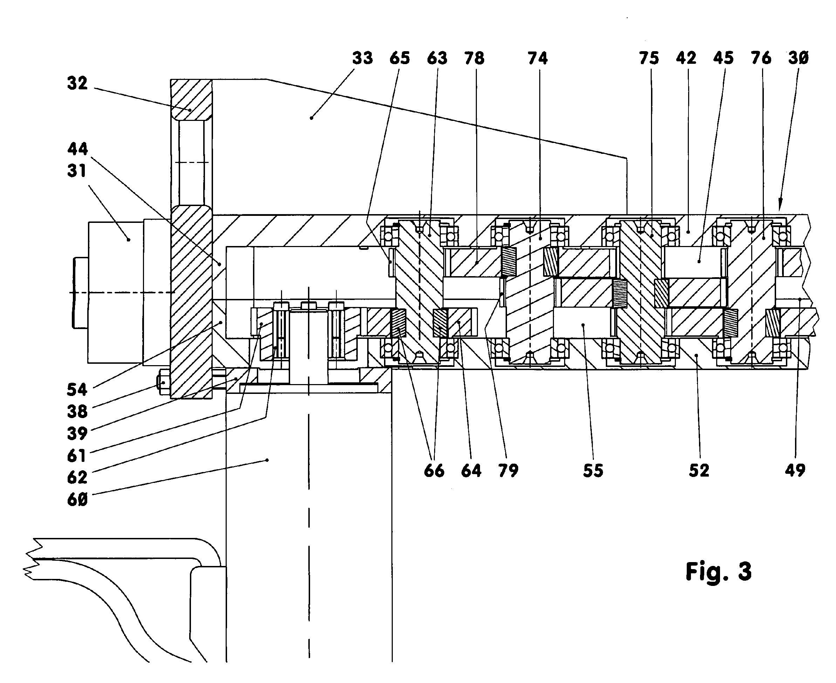

Nach Figur 3 hat das z.B. aus einer Aluminiumlegierung gefräste Getriebegehäuse (40) - zur Lagerung von einem Servomotor (60), von z.B. fünf Nebenwellen (63, 74-77), von zwei Zwischenrädern (83, 84) und von den Greiferspindeln (93, 103) der beiden Dreibacken-Greifer (90, 91) - ein Gehäuseoberteil (41) und ein Gehäuseunterteil (51).

Jedes Gehäuseteil (41, 51) hat einen Boden (42, 52), zwei Stirnwände (43, 44; 53, 54) und zwei Seitenwände (45, 46; 55, 56). Beide Gehäuseteile (41, 51) kontaktieren sich in einer ebenen Montagefuge (49), die nahezu mittig zwischen den Böden (42, 52) liegt. Die hinteren Stirnwände (44, 54) der Gehäuseteile (41, 51) sind mit der Flanschplatte (32) verschraubt. Außen am Boden (52) des Gehäuseunterteils (51) ist in der Nähe der Flanschplatte (32) der Servomotor (60) über eine mittels Einstellschrauben bzw. Einstellmuttern (38) - zur Einstellung des Achsabstands der ersten beiden Getrieberäder (61, 64) - querverschiebbare Flanschscheibe (39) befestigt.

Auf dem Boden (42) des Gehäuseoberteils (41) sind zwei Versteifungsrippen (33) parallel angeordnet, die wiederum mit der nach oben über das Gehäuse (40) überstehenden Flanschplatte (32) verschraubt sind. Die Versteifungsrippen (33) befinden sich jeweils in der Verlängerung der jeweiligen Seitenwände (45, 46) des Getriebeoberteils (41). Sie erstrecken sich z.B. über ein Drittel der Gehäuselänge.

Im Gehäuse (40) sind zwischen den Böden (42, 52,) die Nebenwellen (63, 74-77) der sechs Getriebestufen, die auf Achsen (81, 82) gelagerten Zwischenräder (83, 84) und die Spindeln (93, 103) der Greifer (90, 91) gelagert. Alle Achsen (81, 82) und Wellen (63, 74-77; 93, 103) sind beispielsweise untereinander parallel angeordnet und liegen zugleich in einer Ebene, die die Böden (42, 52) der Länge nach mittig teilt.

Auf der Antriebswelle des Servomotors (60) sitzt ein Antriebsstirnrad (61) mit Hilfe eines Kegelspannsatzes (62). Das Antriebsstirnrad (61) kämmt mit dem großen Stirnrad (64) der Nebenwelle (63) als erste Zahnradpaarung. Das Antriebsstirnrad (61) und das große Stirnrad (64) haben z.B. die gleiche Zähnezahl. Als Wellen-Naben-Verbindung zwischen der Nebenwelle (63) und dem großen Stirnrad (64) dienen zwei einander gegenüber liegende Passfedern (66). Oberhalb der Wellen-Naben-Verbindung befindet sich auf der ersten Nebenwelle (63) das kleine Stirnrad (65). Das kleine Stirnrad (65) entsteht durch eine dortige Verzahnung der Nebenwelle (63). Der Teilkreisdurchmesser des großen Stirnrades (64) ist um den Faktor 1,92 größer als der des kleinen Stirnrades (65).

Das nach Figur 3 untere Wellenende der Nebenwelle (63) sitzt wälzgelagert in einer Sacklochstufenbohrung des Bodens (52). Das obere Wellenende der Nebenwelle (63) ist in einer vergleichbaren Sacklochstufenbohrung des Bodens (42) des Gehäuseoberteils (41) integriert. Als Wälzlager werden beispielsweise Rillenkugellager eingesetzt. Die Nebenwelle (63) ist über seine beiden Wälzlager in den beiden baugleichen, einander gegenüberliegenden Sacklochstufenbohrungen schwimmend gelagert.

Das kleine Stirnrad (65) der ersten Nebenwelle (63) treibt das große Stirnrad (78) der zweiten Nebenwelle (74) an. Das kleine Stirnrad (79) dieser Nebenwelle (74), seine Verzahnung ist Teil der Nebenwelle (74), hat den gleichen Durchmesser wie das kleine Stirnrad (65). Allerdings ist der Teilkreisdurchmesser des großen Stirnrades (78) um den Faktor 2,84 größer als der der kleinen Stirnräder (65, 79).

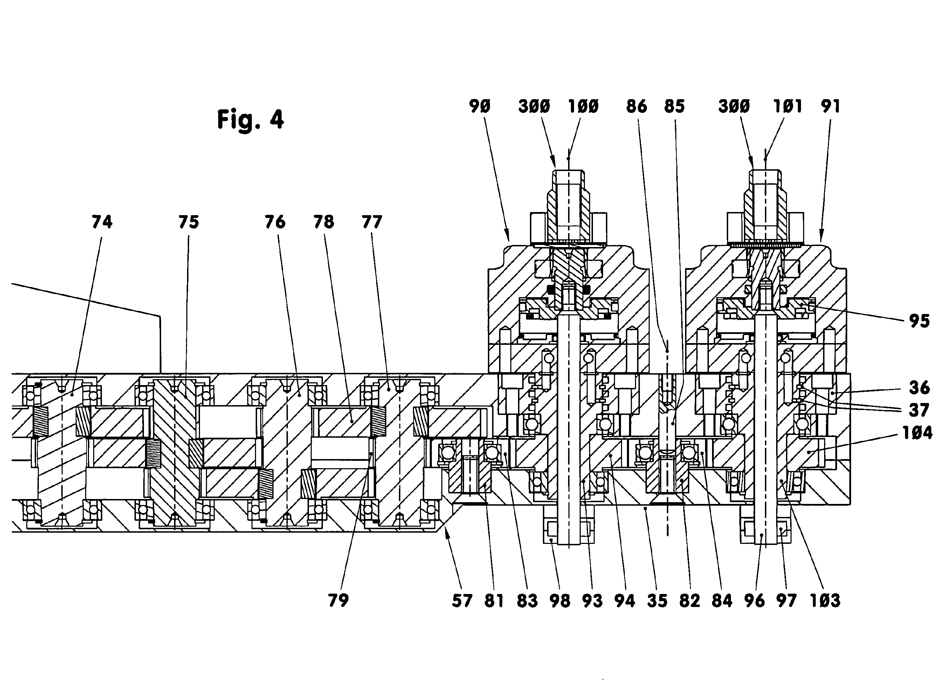

Das Abtriebsrad dieser Nebenwelle (74), also das kleinere Stirnrad (79), kämmt wiederum mit dem großen Stirnrad der dritten Nebenwelle (75). Die Größe der beiden Zahnräder dieser Nebenwelle (75) entspricht der der vorherigen (74) und der der noch folgenden beiden Nebenwellen (76, 77). Hierbei sind die Nebenwellen (74, 77, 75) baugleich, wobei bei der dritten Nebenwelle (75) das kleine Stirnrad nach den aus den Figuren 3 und 4 bekannten Darstellungen unterhalb des großen Stirnrads angeordnet ist. Bei den Nebenwellen (63, 76) kontaktiert jeweils jedes Stirnrad den Innenring des jeweils benachbarten Wälzlagers, während bei den Nebenwellen (74, 77) jeweils das kleine Stirnrad und bei der Nebenwelle (75) das große Stirnrad in der Wellenmitte sitzt.

Das Abtriebsrad der fünften Nebenwelle (77) kämmt mit dem ersten Zwischenrad (83), dessen Teilkreisdurchmesser um den Faktor 1,43 größer ist als der des kleinen Stirnrades der fünften Nebenwelle (77). Das Zwischenrad (83) ist im Gehäuseunterteil (51) in einem gestuften Lagerzapfen (81) gelagert. Der mit einem Innengewinde ausgestattete Lagerzapfen (81) ist mittels einer Senkschraube am Gehäuseunterteil (51) befestigt. Das Zwischenrad (83) ist auf dem Lagerzapfen (81) mittels eines Rillenkugellagers gelagert, dessen Außenring axial zwischen einem Zwischenradbund und einem Sicherungsring mit Spiel fixiert ist.

Im Bereich des ersten Zwischenrades (83) verjüngt sich der Boden (52) des Gehäuseunterteils (51) in einem Bodenabsatz (57) bezüglich der Höhe und der Breite, so dass ab dort die Gehäusehöhe um z.B. 17,3% und die Gehäusebreite um 34% verringert ist. In diesem vorderen Getriebebereich (35) vergrößert sich zugleich die Wandstärke des Bodens (42) des Gehäuseoberteils (41) auf das Doppelte.

Das erste Zwischenrad (83) kämmt mit einem auf der ersten hohlen Greiferspindel (90) aufgeschrumpften ersten Greiferrad (94). Der Teilkreisdurchmesser des Greiferrades (94) ist um den Faktor 1,92 größer als der des kleinen Stirnrades der letzten Nebenwelle (77). Somit beträgt die Gesamtübersetzung des Getriebes ins Langsame im Ausführungsbeispiel i = 84,5. Alle Stirnräder sind dabei beispielsweise geradverzahnt.

Beidseits des Greiferrades (94) sind die die Greiferspindel (93) lagernden Rillenkugellager angeordnet. Oberhalb des oberen Rillenkugellagers befindet sich im Gehäuseoberteil (41) eine große Einsenkung (47), in der ein Druckluftversorgungsring (36) mit zwei Druckluftkanälen (37) eingesetzt ist. Über die Druckluftkanäle (37) des Druckluftversorgungsrings (36) werden die Öffnungs- und die Schließbewegungen des an der Greiferspindel (93) angeflanschten Dreibacken-Greifers (90) gesteuert.

Das erste Greiferrad (94) kämmt über ein zweites Zwischenrad (84) mit dem Greiferrad (104) der Greiferwelle (103) des zweiten, ganz außen liegenden Greifers (91). Beide Dreibacken-Greifer (90, 91), einschließlich der Greiferräder (94, 104) sind baugleich ausgeführt.

Der Lagerzapfen (82) des zweiten Zwischenrades (84) ist im Gehäuseoberteil (41) durch einen zusätzlichen Zapfen (85) abgestützt. Letzterer greift in die Bohrung des im Gehäuseunterteil (51) befestigten Lagerzapfens (82) ein.

Jeder pneumatisch betriebene Dreibacken-Greifer (90, 91) umfasst eine z.B. doppelt wirkende Zylinder-Kolben-Einheit, deren in Schließrichtung zur Greifkraftsicherung z.B. federbelasteter Kolben (95) über ein Keilhakengetriebe die Greiferbacken (92) synchron bewegt. In der Durchgangsbohrung der Greiferwelle (93, 103) ist eine Positionsanzeigestange (96) geführt, die zugleich die Kolbenstange der Zylinder-Kolben-Einheit darstellt. Die Positionsanzeigestange (96) ist nach Figur 4 unten aus dem Boden (52) des Gehäuseunterteils (51) herausgeführt. Unterhalb des Bodens (52) trägt sie einen zumindest teilweise magnetischen Geberring (97). Die Position des Geberringes (97) wird zur Abfrage der Offen- und der Schließstellung des jeweiligen Dreibacken-Greifers (90, 91) z.B. mit Hall-Sensoren (99) abgefragt.

Anstelle der beiden eng nebeneinander angeordneten Greiferspindeln (93, 103) können auch drei oder mehr Greiferspindeln in der Mehrfachausschraubeinheit (30), z.B. um ein Zentrum herum, angeordnet werden. Das Zentrum bildet hierbei beispielsweise die Mittellinie (86) des zweiten Zwischenrades (84).

In diesem Fall können die Greiferspindeln untereinander auch über ein Hohlrad oder entsprechende Zugmittel, wie z.B. Ketten oder Zahnriemen, verbunden sein. Auch kann das zentrale Zwischenrad mit dem Antriebsrad des Servomotors (60) direkt über ein Zugmittel angetrieben werden.

Anstatt der Dreibacken-Greifer (90, 91) können je nach Anwendungsfall auch Greifer mit einer anderen Backenanzahl oder Greifer eines anderen Typs verwendet werden. Möglich sind z.B. Parallelgreifer, Kniehebelgreifer, Winkelgreifer, Zangengreifer, Lochgreifer oder dergleichen.

Auch kann der pneumatische Antrieb durch einen hydraulischen, elektromagnetischen, elektromechanischen, piezoelektrischen oder einen vergleichbaren Antrieb ersetzt werden. Auch Antriebssysteme, die auf dem Formgedächtniseffekt beruhen, sind denkbar.

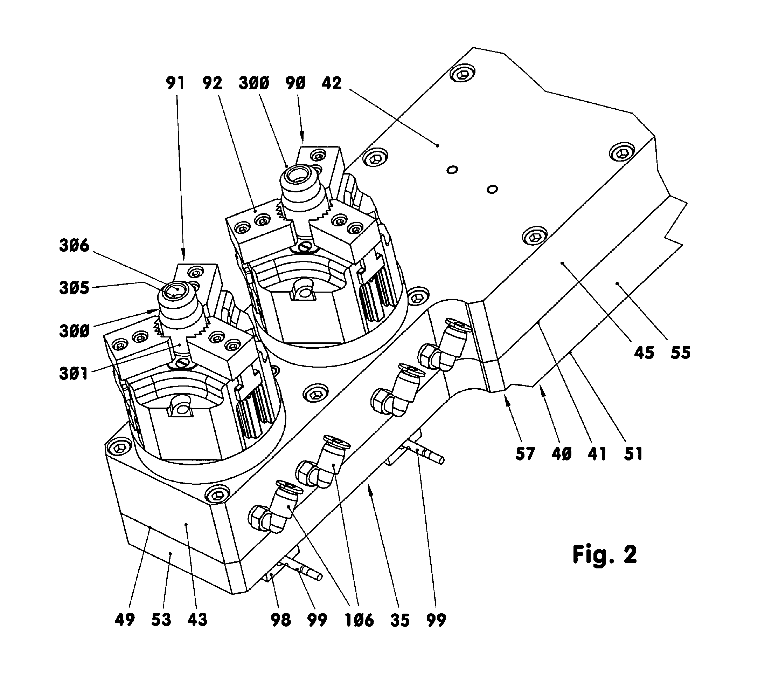

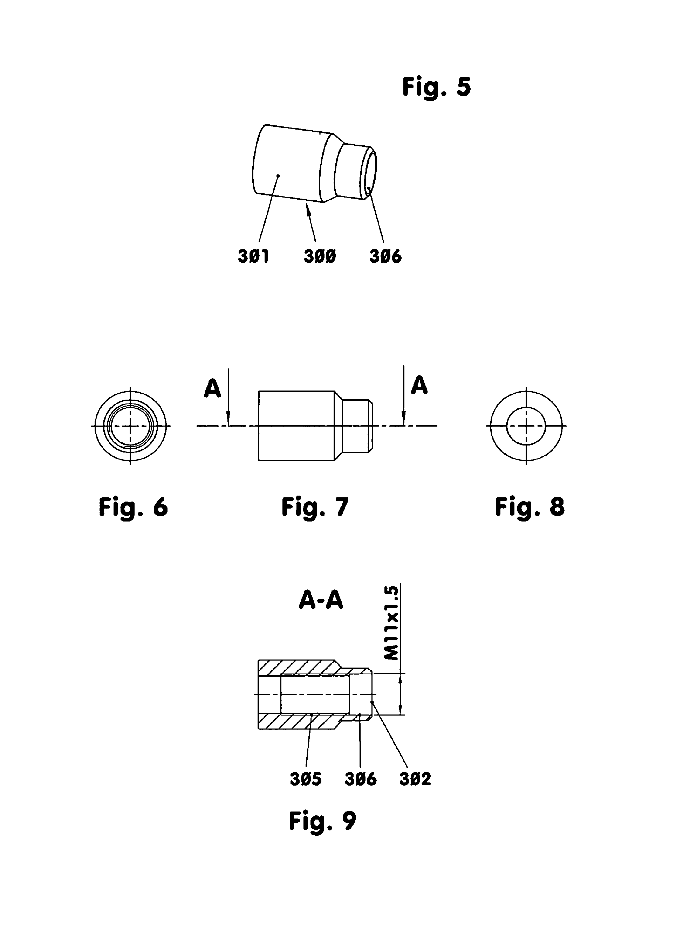

Nach den Figuren 2 und 4 ist in jedem Dreibacken-Greifer (90, 91) als Werkstück eine außen gestufte Gewindehülse (300) eingespannt. Mit ihrem hinteren zylindrischen Abschnitt (301), vgl. auch Figuren 5 bis 9, wird sie zwischen den Greiferbacken (92) gehalten. Das Werkstück (300) hat ein gegenüber seiner vorderen Stirnfläche zurückgesetztes Innengewinde (305). Zwischen dem Innengewinde (305), einem Sondergewinde M11 x 1,5 und der vorderen Stirnfläche (302) befindet sich ein kurzer zylindrischer Bohrungsabschnitt (306).

In diesem Fall verbleiben nach dem Öffnen des für die Herstellung zweier Gewindehülsen (300) eingerichteten Spritzgießwerkzeugs (210) der Spritzgießmaschine (200) die beiden wiederverwendbaren die jeweiligen Gewinde (305) formenden Kerne im Spritzgießwerkzeug (210).

Die aus dem Gelenkroboter (10) und der Mehrfachausschraubeinheit (30) bestehende Handhabungsvorrichtung schraubt z.B. das Werkstück (300) vom Kern oder umgekehrt. Hier wird die Mehrfachausschraubeinheit (30) vom Gelenkroboter (10) durch das Fenster (202) in den Arbeitsraum der Spritzgießmaschine (200) hinein geführt. Dort wird die Mehrfachausschraubeinheit (30) axial auf die noch auf den Kernen sitzenden Gewindehülsen (300) zubewegt, bis die geöffneten Greiferbacken (92) der Dreibacken-Greifer (90, 91) die Gewindehülsen (300) außen umgeben. Nach dem Schließen der Dreibacken-Greifer (90, 91) wird die Mehrfachausschraubeinheit (30) bei laufendem Servomotor (60) entlang der Mittellinien der Gewindekerne von diesen wegbewegt. Die Werkstücke (300) werden durch gezieltes Antreiben von den Gewindekernen heruntergeschraubt. Die Rotationsbewegung erzeugt der Servomotor (60) mit dem nachgeschalteten Stirnradgetriebe, während die Linearbewegung durch die überlagerte Bewegung z.B. mehrerer Roboterachsen (13, 15, 17, 21, 23) entsteht.

Sobald die Gewindehülsen (300) von den Gewindekernen heruntergeschraubt sind und der zylindrische, gewindefreie Anteil (306) der Gewindebohrung den Gewindekern verlassen hat, wird die Mehrfachausschraubeinheit (30) aus dem Fenster (202) herausbewegt, um vor der Spritzgießkabine (201) die entformten Werkstücke (300) z.B. in einer Transportkiste abzulegen. Während dieser Phase schließt das Spritzgießwerkzeug (210), um zwei weitere Gewindehülsen (300) herstellen zu können. Nach dem Spritzgießvorgang und dem Öffnen der Form wiederholt sich dieser Vorgang.

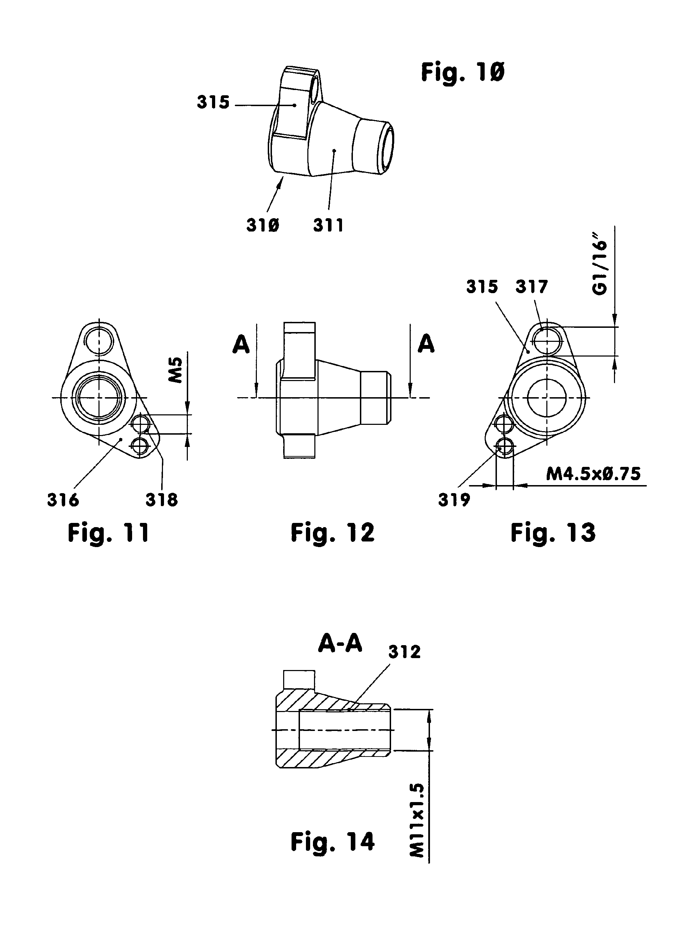

In den Figuren 10 bis 14 wird als Werkstück ein Kniehebel (310) dargestellt, der aus einer Hülse (311) mit einem Innengewinde (312) und zwei an der Hülse (311) angeformten Hebelarmen (315, 316) besteht. Der in den Figuren nach oben abstehende Hebelarm (315) weist eine Gewindebohrung (317) mit einem Zoll-Gewinde auf. Der andere Hebelarm (316) besitzt zwei eng nebeneinander liegende Gewindebohrungen (318) und (319). Die zentrumsnahe Gewindebohrung ist ein M5-Gewinde, während die zentrumsferne Gewindebohrung (319) das Sondergewinde M4,5 x 0,75 aufweist.

Beim Entformen dieses Bauteils (310) bleibt der Kniehebel auf einem zentralen Kern, der die Gewindebohrung (312) formt, in der offenen Spritzgießform fixiert. Die Handhabungsvorrichtung muss zunächst die Kerne der Gewindebohrungen (317, 318, 319) entfernen. Dazu haben die wiederverwendbaren Kerne dieser Bohrungen unterschiedliche Längen. Der Kern der Gewindebohrung (317) ist am längsten, während der Kern der Gewindebohrung (319) am kürzesten ist.

Somit greift sich der Dreibacken-Greifer (90) zunächst den langen Kern der Gewindebohrung (317), um ihn zusammen mit dem Handhabungsgerät (10) herauszuschrauben. Als nächster Kern wird der der Gewindebohrung (318) ergriffen und entfernt. Als letzter wird der Kern der Gewindebohrung (319) herausgeschraubt. Bei jedem dieser drei Vorgänge wird der entsprechende Kern nach dem Herausschrauben sorgfältig für die weitere Wiederverwendung gesondert abgelegt.

Abschließend ergreift der Dreibacken-Greifer (90) den Kniehebel (310) im Bereich der Hülse (311) zwischen den Hebelarmen, um ihn als ganzes vom zentralen Kern der Gewindebohrung (312) abzuschrauben. Der Kniehebel (310) wird für die Weiterbearbeitung separat abgelegt.

Jeder der vier Ausschraubvorgänge hat z.B. bei einer konstanten Drehzahl des Servomotors (60) eine andere Vorschubgeschwindigkeit aufgrund der unterschiedlichen Gewindesteigungen.

Bei diesem Entformvorgang werden die Kerne und das Werkstück (310) jeweils mit den gleichen Greiferbacken (92) in nacheinander ablaufenden Vorgängen erfasst und gehandhabt.

### Bezugszeichenliste:

- 10: Handhabungsgerät, Gelenkroboter, 5-Achs-Roboter
- 11: Grundplatte
- 13: A-Achse
- 14: Drehtisch
- 15: B-Achse
- 16: Fußhebel
- 17: C-Achse
- 18: Kniehebel
- 21: D-Achse
- 22: Tragarm
- 23: E-Achse
- 24: Kupplung

- 30: Mehrfachausschraubeinheit, Getriebe
- 31: Kupplungsgegenstück
- 32: Flanschplatte
- 33: Versteifungsrippen

- 35: vorderer Getriebebereich
- 36: Druckluftversorgungsring
- 37: Druckluftkanäle
- 38: Einstellschrauben, Einstellmuttern
- 39: Flaschscheibe

- 40: Getriebegehäuse
- 41: Gehäuseoberteil, Gehäuseteil
- 42: Boden, oben
- 43: Stirnwand, vorn
- 44: Stirnwand, hinten
- 45, 46: Seitenwände

- 47: Einsenkung
- 49: Montagefuge

- 51: Gehäuseunterteil, Gehäuseteil
- 52: Boden, unten
- 53: Stirnwand, vorn
- 54: Stirnwand, hinten
- 55, 56: Seitenwände
- 57: Bodenabsatz

- 60: Servomotor, Antrieb für (30)
- 61: Antriebsstirnrad
- 62: Kegelspannsatz
- 63: Nebenwelle
- 64: Stirnrad, groß
- 65: Stirnrad, klein
- 66: Passfedern

- 74-77: Nebenwellen
- 78: Stirnrad, groß
- 79: Stirnrad, klein

- 81, 82: Achsen, Lagerzapfen
- 83, 84: Zwischenräder
- 85: Zapfen
- 86: Mittellinie

- 90, 91: Greifer, Dreibackengreifer, Dreibackenspannfutter
- 92: Greifelemente, Greiferbacken, Backen
- 93: Greiferspindel, erste
- 94: Greiferrad, erstes
- 95: Kolben

- 96: Positionsanzeigestange, Kolbenstange
- 97: Geberring, magnetisch
- 98: Halterung für Hall-Sensor
- 99: Hall-Sensor

- 100, 101: Rotationsachsen von (90, 91)
- 103: Greiferspindel, zweite
- 104: Greiferrad, zweites
- 106: Luftanschlüsse

- 200: Spritzgießmaschine
- 201: Spritzgießkabine
- 202: Fenster, vorn
- 210: Spritzgießwerkzeug
- 211: Schließeinheit

- 300: Werkstück, Gewindehülse mit gestufter Außenkontur, eingespannt
- 301: Abschnitt, zylindrisch
- 302: Stirnfläche, vorn
- 305: Innengewinde, Gewindebohrung
- 306: zylindrischer Bohrungsabschnitt von (305)

- 310: Werkstück, Kniehebel mit mehreren Gewinden
- 311: Hülse
- 312: Innengewinde, Gewindebohrung
- 315, 316: Hebelarme
- 317: Gewindebohrung G1/16"
- 318: Gewindebohrung M5
- 319: Gewindebohrung M4 x 0,75

## Patentansprüche

1. Handhabungsvorrichtung zum manipulierenden Entfernen von mindestens zwei wiederverwendbaren Kernen in einem Arbeitsgang, wobei die Handhabungsvorrichtung mindestens zwei öffen- und schließbare Greifer (90, 91) aufweist,
**dadurch gekennzeichnet,**
- **dass** die Greifer (90, 91) um ihre jeweiligen Rotationsachsen (100, 101) antreibbar geführt sind,
- **dass** ein greifertragendes Getriebe (30) in der Handhabungsvorrichtung angetrieben linear geführt wird,
- **dass** die Rotations- und die Linearbewegung zumindest zeitweise gleichzeitig stattfinden und dabei zueinander koordiniert sind.

2. Handhabungsvorrichtung gemäß Anspruch 21, **dadurch gekennzeichnet, dass** die jeweilige Rotationsachsen (100, 101) der Greifer (90, 91) quer zur Schließ- und Öffenbewegung der greifereigenen Greifelemente (92) orientiert ist.

3. Handhabungsvorrichtung gemäß Anspruch 1, **dadurch gekennzeichnet, dass** die Linearbewegung des Getriebes (30) - als Teil der Handhabungsvorrichtung - der Bewegungsrichtung einer Vorschubachse des Handhabungsgeräts (10) entspricht oder durch eine überlagerte Bewegung mehrerer Bewegungsachsen (13, 15, 17, 21, 23) des Handhabungsgeräts (10) entsteht.

4. Handhabungsvorrichtung gemäß Anspruch 3, **dadurch gekennzeichnet, dass** das Handhabungsgerät (10) ein Gelenkroboter ist.

5. Handhabungsvorrichtung gemäß Anspruch 4, **dadurch gekennzeichnet, dass** der Gelenkroboter (10) drei Hauptachsen (13, 15, 17) und zwei Nebenachsen (21, 23) aufweist.

6. Handhabungsvorrichtung gemäß Anspruch 1, **dadurch gekennzeichnet, dass** jeder Greifer mindestens einen Schwenkwinkel von 361 Winkelgraden aufweist.

7. Handhabungsvorrichtung gemäß Anspruch 1, **dadurch gekennzeichnet, dass** das greifertragende Getriebe (30) ein Stirnradgetriebe ist.

8. Handhabungsvorrichtung gemäß Anspruch 1, **dadurch gekennzeichnet, dass** das greifertragende Getriebe (30) von einem mit einem Tachogenerator ausgestatteten Servomotor (60) angetrieben wird.
